# EUROPEAN PATENT APPLICATION

(11) **EP 4 797 396 A1**
(43) Date of publication of application: **26.08.2026**
(21) Application number: 26150102.7
(22) Date of filing: 02.01.2026
(51) Int. Cl.: H01M 50/15, H01M 50/184, H01M 50/188, H01M 50/55, H01M 50/593

(54) **SECONDARY BATTERY AND BATTERY MODULE INCLUDING THE SAME**

(30) Priority: 20.02.2025 KR 20250022336
(71) Applicant: SAMSUNG SDI CO., LTD., Yongin-si, Gyeonggi-do 17084 (KR)
(72) Inventor: KIM, Bo Hun, Suwon-si, Gyeonggi-do 16678 (KR); KIM, Duck Hyun, Suwon-si, Gyeonggi-do 16678 (KR); KIM, Heon Hee, Suwon-si, Gyeonggi-do 16678 (KR); YOO, Seung Yeol, Suwon-si, Gyeonggi-do 16678 (KR)
(74) Representative: Marks & Clerk LLP

(57) **Abstract**

A secondary battery, including a case, an electrode assembly in the case, a cap plate coupled to the case, the cap plate facing the electrode assembly, a terminal protruding outward from the cap plate, the terminal being connected to the electrode assembly, an insulating member between the cap plate and the terminal, and a first fastening member extending from the insulating member, the first fastening member being coupled to the terminal.

## Description

### BACKGROUND

### 1. Field

The present disclosure relates to a secondary battery and a battery module including the same.

### 2. Description of the Related Art

In general, due to the recent proliferation of electronic devices using batteries, such as mobile phones, notebook computers, and electric vehicles, the demand for secondary batteries having high energy density and high capacity has rapidly increased. Accordingly, research and development for improving the performance of a lithium secondary battery are being actively conducted.

A lithium secondary battery is a battery including a positive electrode and a negative electrode including an active material capable of intercalating and deintercalating lithium ions, and an electrolyte solution, and generates energy through oxidation/reduction reactions when lithium ions are intercalated/deintercalated at the positive and negative electrodes.

The above-described information disclosed in the technology that forms the background of the present disclosure is only intended to improve understanding of the background of the present disclosure, and thus may include information that does not constitute the related art.

### SUMMARY

Embodiments include a secondary battery, including a case, an electrode assembly in the case, a cap plate coupled to the case, the cap plate facing the electrode assembly, a terminal protruding outward from the cap plate, the terminal being connected to the electrode assembly, an insulating member between the cap plate and the terminal, and a first fastening member extending from the insulating member, the first fastening member being coupled to the terminal.

The terminal may include a first terminal body passing through the cap plate, and the first terminal body may include an inner surface facing the electrode assembly, an outer surface opposite to the inner surface, and a side surface between the inner surface and the outer surface, the side surface intersecting the inner surface and the outer surface.

The first terminal body may further include a first side groove that is concave from the side surface, and the first fastening member may include a first side hook extending from the insulating member, the first side hook being in the first side groove.

The first terminal body may further include a first extension groove connected to the first side groove and extending in a direction intersecting an extension direction of the first side groove, and the first fastening member may include a first stopper extending from the first side hook, the first stopper being in the first extension groove.

The first fastening member may include a first inner extension extending from the insulating member, the first inner extension facing the inner surface.

The first terminal body may further include a first inner groove that is concave from the inner surface toward the outer surface, and the first fastening member may further include a first inner hook extending from the first inner extension, the first inner hook being in the first inner groove.

The first fastening member may include a first outer extension extending from the insulating member, the first outer extension facing the outer surface.

The first terminal body may further include a first outer groove that is concave from the outer surface toward the inner surface, and the first fastening member may further include a first outer hook extending from the first outer extension, the first outer hook being in the first outer groove.

The terminal may further include a second terminal body on the outer surface, the second terminal body being connected to the first terminal body.

A cross-sectional area of the second terminal body may be smaller than a cross-sectional area of the first terminal body.

The secondary battery may further include a second fastening member extending from the insulating member, the second fastening member being coupled to the cap plate.

The cap plate may include an inner cap surface facing the electrode assembly, and an outer cap surface opposite to the inner cap surface, wherein the second fastening member may include a second inner extension extending from the insulating member, the second inner extension facing the inner cap surface.

The cap plate may further include a second inner groove that is concave from the inner cap surface toward the outer cap surface, and the second fastening member may further include a second inner hook extending from the second inner extension, the second inner hook being in the second inner groove.

The cap plate may further include a second extension groove connected to the second inner groove, the second extension groove extending in a direction intersecting an extension direction of the second inner groove, and the second fastening member may further include a second stopper extending from the second inner hook, the second stopper being in the second extension groove.

The cap plate may include an inner cap surface facing the electrode assembly, and an outer cap surface opposite to the inner cap surface, wherein the second fastening member may include a second outer extension extending from the insulating member, the second outer extension facing the outer cap surface.

The cap plate may further include a second outer groove that is concave from the outer cap surface toward the inner cap surface, and the second fastening member may further include a second outer hook extending from the second outer extension, the second outer hook being in the second outer groove.

The cap plate may include an inner cap surface facing the electrode assembly, an outer cap surface opposite to the inner cap surface, a terminal hole passing through the inner cap surface and the outer cap surface, a side cap surface surrounding the terminal hole, the side cap surface intersecting the inner cap surface and the outer cap surface, and a second side groove that is concave toward an inside of the side cap surface, wherein the second fastening member may include a second side hook extending from the insulating member, the second side hook being in the second side groove.

The insulating member may include a first insulating member facing the terminal, a second insulating member facing the cap plate, and an insulating fastening member between the first insulating member and the second insulating member.

The insulating fastening member may include an insulating groove that is concave toward an inside of one of the first insulating member and the second insulating member, and an insulating hook may protrude from another of the first insulating member and the second insulating member, the insulating hook being in the insulating groove.

Embodiments include a battery module, including a housing, and a plurality of secondary batteries in the housing, wherein each of the plurality of secondary batteries includes a case, an electrode assembly in the case, a cap plate coupled to the case, the cap plate facing the electrode assembly, a terminal protruding outward from the cap plate, the terminal being connected to the electrode assembly, an insulating member between the cap plate and the terminal, and a first fastening member extending from the insulating member, the first fastening member being coupled to the terminal.

At least some of the above and other features of the invention are set out in the claims.

### BRIEF DESCRIPTION OF THE DRAWINGS

Features will become apparent to those of ordinary skill in the art by describing in detail example embodiments with reference to the attached drawings, in which:
FIG. 1 is a schematic perspective view illustrating a configuration of a battery module according to a first embodiment of the present disclosure;
FIG. 2 is a schematic perspective view illustrating a configuration of a secondary battery according to the first embodiment of the present disclosure;
FIG. 3 is a schematic exploded perspective view illustrating the configuration of the secondary battery according to the first embodiment of the present disclosure;
FIG. 4 is a schematic view illustrating a configuration of an electrode assembly according to the first embodiment of the present disclosure;
FIG. 5 is a schematic cross-sectional view illustrating a configuration of a terminal according to the first embodiment of the present disclosure;
FIG. 6 is a schematic enlarged view illustrating a configuration of a first fastening member according to the first embodiment of the present disclosure;
FIG. 7 is an exploded perspective view of FIG. 6;
FIG. 8 is a schematic cross-sectional view illustrating a configuration of a secondary battery according to a second embodiment of the present disclosure;
FIG. 9 is an exploded perspective view of FIG. 8;
FIG. 10 is a schematic cross-sectional view illustrating a configuration of a secondary battery according to a third embodiment of the present disclosure;
FIG. 11 is a schematic enlarged view illustrating a configuration of an insulating member according to the third embodiment of the present disclosure;
FIG. 12 is an exploded perspective view of FIG. 11;
FIG. 13 is a view illustrating a modified example of an insulating groove and an insulating hook illustrated in FIG. 11; and
FIG. 14 is a schematic cross-sectional view illustrating a configuration of a secondary battery according to a fourth embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

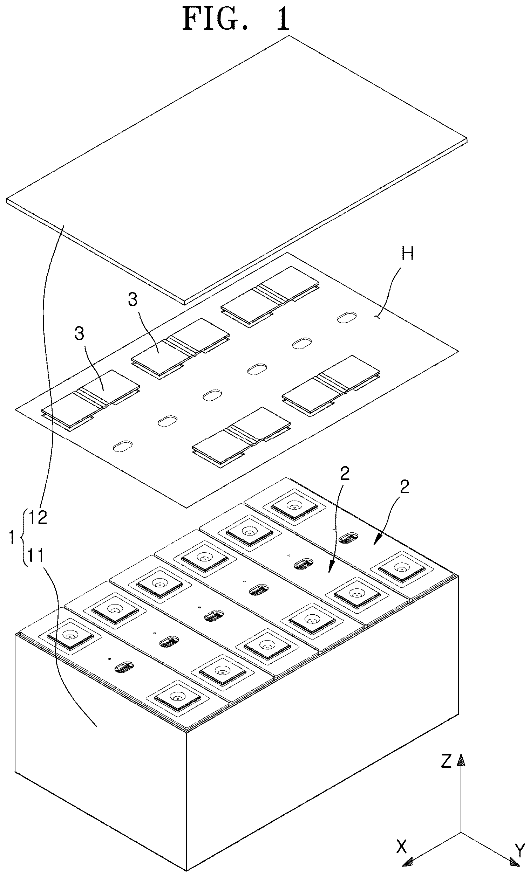

FIG. 1 is a schematic perspective view illustrating a configuration of a battery module according to a first embodiment of the present disclosure.

Referring to FIG. 1, the battery module according to the present embodiment includes a housing 1 and a secondary battery 2.

The housing 1 may form an overall exterior of the battery module and provide a space in which a secondary battery 2 may be accommodated.

The housing 1 according to the present embodiment may include a housing body 11 and a cover 12.

The housing body 11 may be formed in a hollow box shape of which one side is open. A cross-sectional shape of the housing body 11 may be changed to any of various shapes such as a polygonal shape, a circular shape, and an elliptical shape.

The cover 12 may be coupled to the housing body 11 and close an inner space of the housing body 11. As an example, the cover 12 may be formed in substantially a plate shape and disposed to face the open side of the housing body 11. The cover 12 may be fixed to the housing body 11 by any of various coupling methods such as bolting, welding, and fitting.

The secondary battery 2 may function as a unit structure which stores and supplies power in the battery module. The secondary battery 2 may be disposed in the housing 1.

The secondary battery 2 may be provided as a plurality of the secondary battery 2. The plurality of the secondary battery 2 may be disposed in two or more rows in any one direction of a longitudinal direction (an X-axis direction in FIG. 1) or a width direction (a Y-axis direction in FIG. 1) of the housing 1. Although an example of the plurality of the secondary battery 2 disposed in six rows in the longitudinal direction of the housing 1 is illustrated in FIG. 1, an arrangement shape of the plurality of the secondary battery 2 may be changed to any of various shapes. The plurality of the secondary battery 2 may be disposed parallel to each other. A design of the number of the secondary battery 2 may be variously changed according to a size, a shape, etc., of the housing 1.

The plurality of the secondary battery 2 may be electrically connected to each other by a busbar 3.

The busbar 3 according to the present embodiment may be disposed between the cover 12 and the secondary battery 2. The busbar 3 may be provided as a plurality of the busbar 3. Each of the plurality of the busbar 3 may connect a pair of adjacent of the secondary battery 2 in series or parallel.

The busbar 3 may be formed of an electrically conductive material such as copper, aluminum, or nickel. A specific shape of the busbar 3 is not limited to the shape illustrated in FIG. 1, and its design may be changed to any one of various shapes which may electrically connect the adjacent of the secondary batteries 2.

The plurality of the busbar 3 may be supported by a busbar holder H in the housing 1.

The busbar holder H according to the present embodiment may be formed in a flat plate shape. The busbar holder H may be disposed between the cover 12 and the secondary battery 2. The busbar 3 may be fixed to the busbar holder H by any of various coupling methods such as fitting, bolting, and injecting. The busbar holder H may be formed to include a polymer compound material which is electrically insulative.

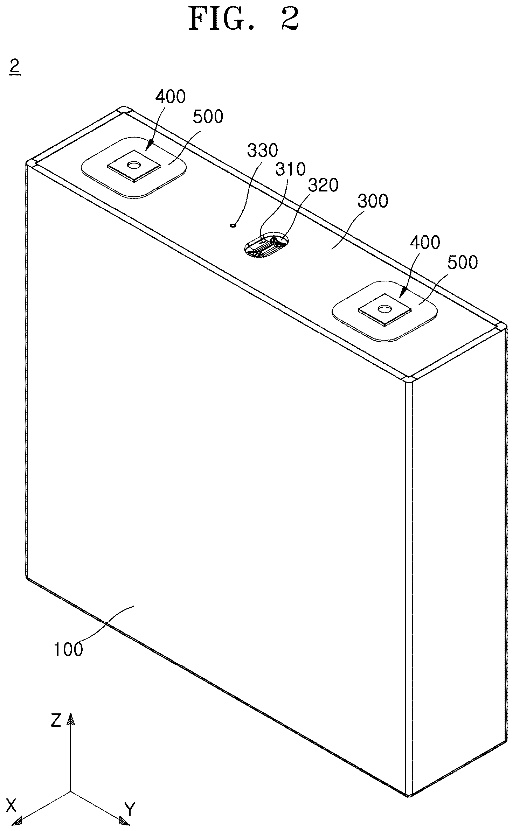

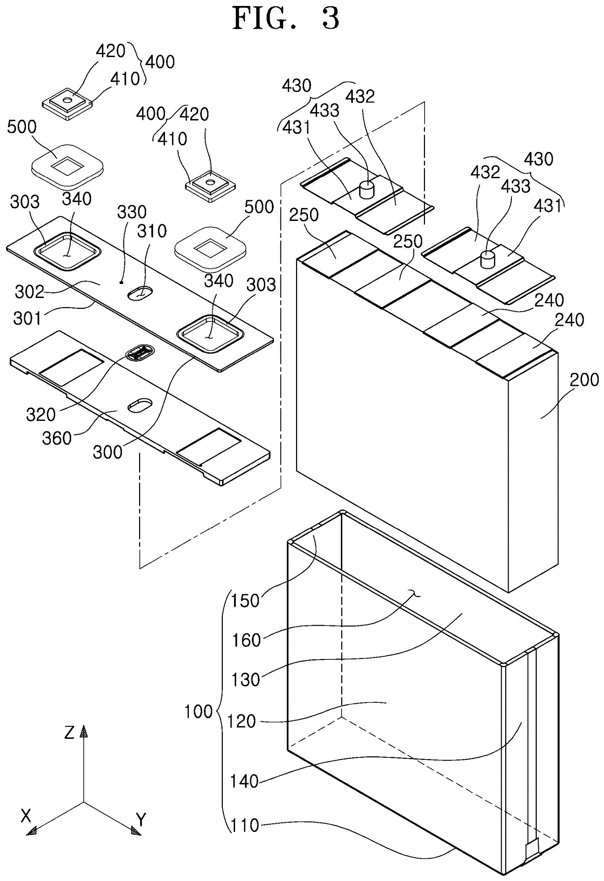

FIG. 2 is a schematic perspective view illustrating a configuration of the secondary battery according to the first embodiment of the present disclosure, and FIG. 3 is a schematic exploded perspective view illustrating the configuration of the secondary battery according to the first embodiment of the present disclosure.

Hereinafter, an example of a lithium-ion secondary battery will be described as the secondary battery. However, the secondary battery may be a lithium polymer battery or cylindrical battery.

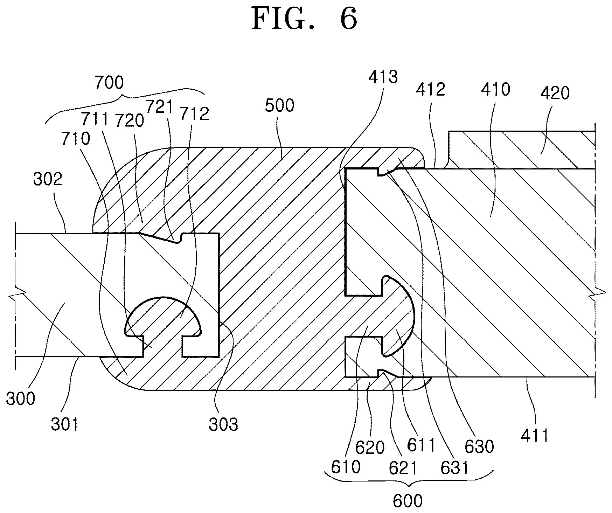

Referring to FIGS. 2 and 3, the secondary battery 2 according to the present embodiment includes a case 100, an electrode assembly 200, a cap plate 300, a terminal 400, an insulating member 500, and a first fastening member 600 (see FIG. 6).

The case 100 may form an overall exterior of the secondary battery 2 and accommodate the electrode assembly 200.

The case 100 according to the present embodiment may include a bottom portion 110, a front portion 120, a rear portion 130, a first side portion 140, and a second side portion 150.

The bottom portion 110 may form a lower exterior of the case 100 (see FIG. 3). The bottom portion 110 according to the present embodiment may have a rectangular plate shape. The bottom portion 110 may be seated on a bottom surface of the housing body 11.

The front portion 120, the rear portion 130, the first side portion 140, and the second side portion 150 may form an exterior of a circumferential surface of the case 100.

Each of the front portion 120, the rear portion 130, the first side portion 140, and the second side portion 150 according to the present embodiment may have a plate shape extending upward from an edge of the bottom portion 110 (see FIG. 3). The front portion 120, the rear portion 130, the first side portion 140, and the second side portion 150 may be disposed to surround an upper space of the bottom portion 110. The front portion 120, the rear portion 130, the first side portion 140, and the second side portion 150 may be disposed to form a rectangular cross-sectional shape.

The front portion 120 and the rear portion 130 may be disposed to face each other in the longitudinal direction of the housing 1 (e.g., parallel to the Y-axis). The front portion 120 and the rear portion 130 may be disposed parallel to each other. Areas of the front portion 120 and the rear portion 130 may be the same.

The first side portion 140 and the second side portion 150 may be disposed to face each other in the width direction of the housing 1 (e.g., parallel to the X-axis). The first side portion 140 and the second side portion 150 may be disposed parallel to each other. Areas of the first side portion 140 and the second side portion 150 may be the same. The areas of the first side portion 140 and the second side portion 150 may be smaller than the areas of the front portion 120 and the rear portion 130.

The case 100 may further include an opening 160. The opening 160 according to the present embodiment may be a space surrounded by upper end portions of the front portion 120, the rear portion 130, the first side portion 140, and the second side portion 150. The opening 160 may connect an inner space and an outer space of the case 100.

Accordingly, the case 100 according to the present embodiment may have a rectangular hexahedral shape of which an upper side is open.

A first direction to be described below may be parallel to a Z-axis and may be a direction from the bottom portion 110 toward the opening 160 in FIGS. 2 and 3. A second direction may be parallel to a Y-axis and may be a direction from the second side portion 150 toward the first side portion 140 in FIGS. 2 and 3. A third direction may be parallel to an X-axis and may be a direction from the rear portion 130 toward the front portion 120 in FIGS. 2 and 3.

The electrode assembly 200 may function as a unit structure which charges and discharges power in the secondary battery. The electrode assembly 200 may be accommodated in the case 100.

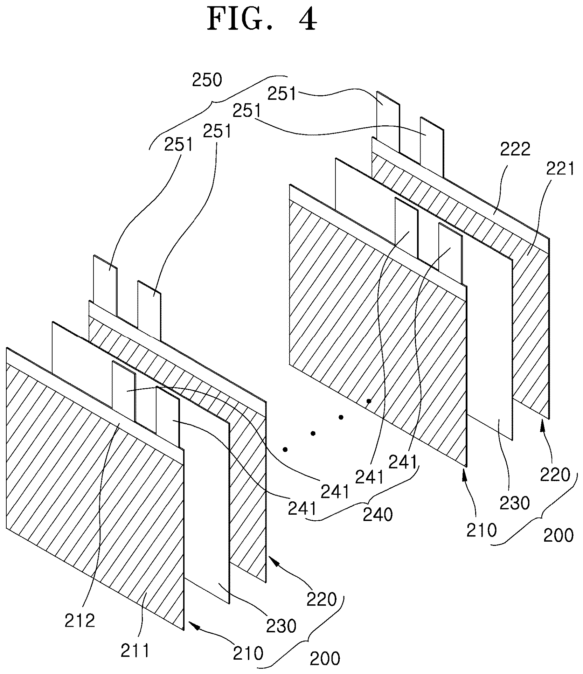

FIG. 4 is a schematic view illustrating a configuration of the electrode assembly according to the first embodiment of the present disclosure.

Referring to FIGS. 2 to 4, the electrode assembly 200 according to the present embodiment may include a first electrode 210, a second electrode 220, and a separator 230 disposed between the first electrode 210 and the second electrode 220. The first electrode 210, the separator 230, and the second electrode 220 may be provided as a plurality of the first electrode 210, a plurality of the separator 230, and a plurality of the second electrode 220.

Hereinafter, an example of the electrode assembly 200, which has a stack shape in which the plurality of the first electrode 210, the plurality of the separator 230, and the plurality of the second electrode 220 are sequentially stacked in the third direction, will be described. However, the shape of the electrode assembly 200 may be formed in a shape in which the plurality of the first electrode 210, the plurality of the separator 230, and the plurality of the second electrode 220 are stacked and wound clockwise or counterclockwise around a winding axis.

The first electrode 210 may function as any one of a positive electrode or negative electrode of the electrode assembly 200. Hereinafter, an example of the first electrode 210 which is the positive electrode of the electrode assembly 200 will be described. However, the first electrode 210 may function as the negative electrode of the electrode assembly 200.

The first electrode 10 according to the present embodiment may be formed in the form of a foil including a metal material such as aluminum or an aluminum alloy. The type, size, and shape of the first electrode 210 may vary, as long as the first electrode 210 has conductivity without causing a chemical change of the secondary battery. A design of the cross-sectional shape of the first electrode 210 may be changed to any of various shapes other than the rectangular shape illustrated in FIG. 4.

The first electrode 210 may be provided as a plurality of the first electrode 210. The plurality of the first electrode 210 may be disposed between the front portion 120 and the rear portion 130 of the case 100 in the third direction. A design of the number of the plurality of the first electrode 210 may be variously changed according to a charging capacity of the secondary battery 2 or the like.

At least a portion of the first electrode 210 may be coated with a first active material layer 211. Both surfaces of the first electrode 210 may be coated with the first active material layer 211. In other embodiments, only one surface of the first electrode 210 may be coated with the first active material layer 211.

In the present embodiment, as the first electrode 210 functions as the positive electrode, the first active material layer 211 may include a positive electrode active material.

The positive electrode active material may be a compound capable of reversible intercalation and deintercalation of lithium (a lithiated intercalation compound). More specifically, as the positive electrode active material, one or more of composite oxides of a metal of cobalt, manganese, nickel, iron, a combination thereof and lithium may be used.

As an example, the positive electrode active material may include at least one of lithium-iron-phosphorus oxide (LiFePO₄, LFP), lithium-manganese-iron-phosphorus oxide (LiMnFePO₄, LMFP), and lithium-nickel-cobalt-manganese oxide (LiNixCoyMnzO₂, NCM). Here, 0 < x < 1, 0 < y <1, 0 < z < 1, and x+y+z = 1 may be satisfied. The positive electrode active material may include only one of lithium-iron-phosphorus oxide (LiFePO₄, LFP), lithium-manganese-iron-phosphorus oxide (LiMnFePO₄, LMFP), and lithium-nickel-cobalt-manganese oxide (LiNixCoyMnzO₂, NCM) or may include two or all of lithium-iron-phosphorus oxide (LiFePO₄, LFP), lithium-manganese-iron-phosphorus oxide (LiMnFePO₄, LMFP), and lithium-nickel-cobalt-manganese oxide (LiNixCoyMnzO₂, NCM).

The first active material layer 211 may further include a positive electrode conductive material.

The positive electrode conductive material is used to impart conductivity to the first active material layer 211, and any electronically conductive material that does not cause a chemical change may be used. Examples of the positive electrode conductive material may include carbon materials such as natural graphite, artificial graphite, carbon black, acetylene black, Ketjen black, carbon fibers, carbon nanofibers, and carbon nanotubes, metal materials in the form of a metal powder or metal fibers containing copper, nickel, aluminum, silver, and the like, conductive polymers such as polyphenylene derivatives, or a mixture thereof.

The first active material layer 211 may further include a positive electrode binder.

The positive electrode binder serves to attach the particles constituting the positive electrode active material to each other well, and also attach the positive electrode active material to the first electrode 210 well.

Examples of the positive electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When the aqueous binder is used as the positive electrode binder, the aqueous binder may further include a cellulose series compound capable of imparting viscosity. As the cellulose series compound, one or more of carboxymethyl cellulose, hydroxypropylmethyl cellulose, methyl cellulose, and an alkali metal salt thereof may be mixed and used. The alkali metal may be Na, K, or Li.

The dry binder may be a polymer material capable of being fiberized, for example, polytetrafluoroethylene, polyvinylidene fluoride, a polyvinylidene fluoride-hexafluoropropylene copolymer, polyethylene oxide, or a combination thereof.

The first electrode 210 may include a first non-coating portion 212 which is not coated with the first active material layer 211. The first non-coating portion 212 according to the present embodiment may be disposed in a region of an upper end portion of the first electrode 210 disposed to face the opening 160 in the case 100. However, a shape of the first non-coating portion 212 may be formed on an entire edge region of the first electrode 210.

The second electrode 220 may function as the other of the positive electrode or the negative electrode of the electrode assembly 200. Hereinafter, an example of the second electrode 220 which is the negative electrode of the electrode assembly 200 will be described. However, the second electrode 220 may function as the positive electrode of the electrode assembly 200.

The second electrode 220 may be provided as a plurality of the second electrode 220. The plurality of the second electrode 220 may be disposed between the front portion 120 and the rear portion 130 of the case 100 in the third direction. The first electrode 210 and the second electrode 220 may be alternately disposed in the third direction. The second electrode 220 may be spaced a predetermined distance from the first electrode 210 in the third direction.

The second electrode 220 according to the present embodiment may be formed in the form of a foil including a metal material such as copper, a copper alloy, nickel, or a nickel alloy. The type, size, and shape of the second electrode 220 may vary, as long as the second electrode 220 has conductivity without causing a chemical change of the secondary battery. A design of the cross-sectional shape of the second electrode 220 may be changed to any of various shapes other than the rectangular shape illustrated in FIG. 4.

At least a portion of the second electrode 220 may be coated with a second active material layer 221. Both surfaces of the second electrode 220 may be coated with the second active material layer 221. Alternatively, only one surface of the second electrode 220 may be coated with the second active material layer 221.

As the second electrode 220 functions as the negative electrode, the second active material layer 221 may include a negative electrode active material.

The negative electrode active material may include a material capable of reversible intercalation/deintercalation of lithium ions, a lithium metal, a lithium metal alloy, a material capable of doping and dedoping of lithium, or a transition metal oxide.

The material capable of reversibly intercalating/deintercalating lithium ions may be a carbon negative electrode active material, which may include, for example, crystalline carbon, amorphous carbon, or a combination thereof. Examples of the crystalline carbon may include graphite such as shapeless, plate-like, flake-like, spherical, or fiber-like natural graphite or artificial graphite, and examples of the amorphous carbon may include soft carbon, hard carbon, mesophase pitch carbide, calcined coke, or the like.

As the lithium metal alloy, an alloy of lithium and a metal selected from Na, K, Rb, Cs, Fr, Be, Mg, Ca, Sr, Si, Sb, Pb, In, Zn, Ba, Ra, Ge, Al, and Sn may be used.

As the material capable of doping and dedopoing of lithium, a Si negative electrode active material or a Sn negative electrode active material may be used. The Si negative electrode active material may be silicon, a silicon-carbon composite, SiOₓ (0 < x ≤ 2), a Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn negative electrode active material may be Sn, SnOₓ(0 < x ≤ 2, e.g., SnO₂), a Sn alloy, or a combination thereof.

The silicon-carbon composite may be a composite of silicon and amorphous carbon. According to one embodiment, the silicon-carbon composite may be in the form of silicon particles and amorphous carbon coated on surfaces of the silicon particles. For example, the silicon-carbon composite may include a secondary particle (core) in which primary silicon particles are aggregated and an amorphous carbon coating layer (shell) located on a surface of the secondary particle. The amorphous carbon may be located between the primary silicon particles, for example, so that the primary silicon particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on the surface of the core.

The Si negative electrode active material or Sn negative electrode active material may be used in combination with a carbon negative electrode active material.

The second active material layer 221 may further include a negative electrode conductive material and a negative electrode binder.

The negative electrode conductive material is used to impart conductivity to the second active material layer 221, and any electronically conductive material that does not cause a chemical change may be used. Examples of the negative electrode conductive material may include carbon materials such as natural graphite, artificial graphite, carbon black, acetylene black, Ketjen black, carbon fibers, carbon nanofibers, and carbon nanotubes, metal materials in the form of a metal powder or metal fibers containing copper, nickel, aluminum, silver, or the like, conductive polymers such as polyphenylene derivatives, or a mixture thereof.

The negative electrode binder serves to well attach particles constituting the negative electrode active material and also serves to well attach the negative electrode active material to the second electrode 220.

Examples of the negative electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When the aqueous binder is used as the negative electrode binder, the aqueous binder may further include a cellulose series compound capable of giving viscosity. As the cellulose series compound, one or more of carboxymethyl cellulose, hydroxypropylmethyl cellulose, methyl cellulose, and an alkali metal salt thereof may be mixed and used. The alkali metal may be Na, K, or Li.

The dry binder may be a polymer material capable of being fiberized, for example, polytetrafluoroethylene, polyvinylidene fluoride, a polyvinylidene fluoride-hexafluoropropylene copolymer, polyethylene oxide, or a combination thereof.

The second electrode 220 may include a second non-coating portion 222 which is not coated with the second active material layer 221. The second non-coating portion 222 according to the present embodiment may be disposed in a region of an upper end portion of the second electrode 220 disposed to face the opening 160 in the case 100. However, a shape of the second non-coating portion 222 may be formed on an entire edge region of the second electrode 220.

The separator 230 may be disposed between the first electrode 210 and the second electrode 220. The separator 230 may perform a function which allows lithium ions to move between the first electrode 210 and the second electrode 220 and prevents a short circuit between the first electrode 210 and the second electrode 220.

The separator 230 may be disposed to entirely surround a surface region of the electrode assembly 200. Accordingly, the separator 230 may prevent the first electrode 210 and the second electrode 220 from being directly exposed to the outside of the electrode assembly 200.

The separator 230 may be made of polyethylene, polypropylene, polyvinylidene fluoride, or a multilayer film of two or more layers thereof , and a mixed multilayer film such as a two-layer separator of polyethylene/polypropylene, a three-layer separator of polyethylene/polypropylene/polyethylene, or a three-layer separator of polypropylene/polyethylene/polypropylene may be used.

The separator 230 may include a porous substrate and a coating layer including an organic material, an inorganic material, or a combination thereof, which is positioned on one surface or both surfaces of the porous substrate.

The porous substrate may be a polymer film made of one polymer selected from polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, Teflon, and polytetrafluoroethylene, or a copolymer or mixture of two or more of the above materials.

The organic material may include a polyvinylidene fluoride polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y2O₃, SrTiO₃, BaTiO₃, Mg(OH)₂, boehmite, and a combination thereof, but this may vary.

The organic material and the inorganic material may be mixed in one coating layer or may be in the form of a coating layer including (or containing) an organic material and a coating layer including (or containing) an inorganic material which are stacked on each other.

The electrode assembly 200 according to the present embodiment may further include a first tab member 240 and a second tab member 250.

The first tab member 240 may be connected to the first electrode 210 and protrude toward the outside of the electrode assembly 200. As the first electrode 210 is exemplified as the positive electrode, the first tab member 240 may function as a positive electrode tab of the secondary battery 2. However, when the first electrode 210 is the negative electrode, the first tab member 240 may function as a negative electrode tab of the secondary battery 2.

The first tab member 240 according to the present embodiment may extend from the electrode assembly 200 in the first direction. As an example, the first tab member 240 may extend toward the opening 160 in the case 100.

The first tab member 240 according to the present embodiment may be provided as one or more of the first tab member 240. Although an example of the first tab member 240 formed as two of the first tab member 240 is illustrated in FIG. 3, the number of the first tab member 240 may be changed to various numbers such as one or three. When the first tab member 240 is provided as a plurality of the first tab member 240, the plurality of the first tab member 240 may be spaced apart from each other in the second direction.

The first tab member 240 may include a first tab 241.

The first tab 241 according to the present embodiment may have the form of a foil extending from the first non-coating portion 212 of the first electrode 210 in the first direction. The first tab 241 may have a substantially rectangular shape. However, the shape of the first tab 241 may be changed to any of various shapes.

The first tab 241 may be integrally formed with the first electrode 210. For example, the first tab 241 may be a region of the first non-coating portion 212 which remains after a partial region of the first non-coating portion 212 is cut or removed by a notching process or the like. In other embodiments, the first tab 241 may be manufactured separately from the first electrode 210 and then connected to the first non-coating portion 212 by welding or the like. A material of the first tab 241 may be the same as the material of the first electrode 210.

The first tab 241 may be provided as a plurality of the first tab 241. The number of the plurality of the first tab 241 may be the same as the number of the first electrode 210. Each of the first tab 241 may individually extend from one of the first non-coating portions 212 of the different of the first electrode 210. Adjacent of the first tab 241 may be disposed to face each other in the third direction. The adjacent of the first tab 241 may be disposed parallel to each other. Accordingly, the first tab member 240 according to the present embodiment may be an assembly of the plurality of the first tab 241 stacked in the third direction. Adjacent of the first tab 241 may be in contact with each other and also spaced apart from each other by a thickness of the separator 230.

The second tab member 250 may be connected to the second electrode 220 and protrude outward from the electrode assembly 200. As the second electrode 220 is exemplified as the negative electrode, the second tab member 250 may function as the negative electrode tab of the secondary battery 2. However, when the second electrode 220 is the positive electrode, the second tab member 250 may function as the positive electrode tab of the secondary battery 2.

The second tab member 250 according to the present embodiment may extend from the electrode assembly 200 in the first direction. That is, the second tab member 250 may extend toward the opening 160 in the case 100.

The first tab member 240 and the second tab member 250 may be disposed to be spaced apart from each other in the second direction. As an example, the second tab member 250 may be disposed at a location spaced a predetermined distance from the first tab member 240 in the second direction.

The second tab member 250 according to the present embodiment may be formed as one or more of the second tab member 250. Although an example of the one or more of the second tab member 250 formed as two of the second tab member 250 is illustrated in FIG. 3, the number of the second tab member 250 may be changed to any of various numbers. When the second tab member 250 is provided as a plurality of the second tab member 250, the plurality of the second tab member 250 may be spaced apart from each other in the second direction.

The second tab member 250 may include a second tab 251.

The second tab 251 according to the present embodiment may have the form of a foil extending from the second non-coating portion 222 of the second electrode 220 in the first direction. The second tab 251 may have a substantially rectangular shape. However, the shape of the second tab 251 may be changed to any of various shapes.

The second tab 251 may be integrally formed with the second electrode 220. For example, the second tab 251 may be a region of the second non-coating portion 222 which remains after a partial region of the second non-coating portion 222 is cut or removed by a notching process. In other embodiments, the second tab 251 may be manufactured separately from the second electrode 220 and then connected to the second non-coating portion 222 by welding or the like. A material of the second tab 251 may be the same as the material of the second electrode 220.

The second tab 251 may be provided as a plurality of the second tab 251. The number of the second tab 251 may be the same as the number of the second electrodes 220. Each of the second tab 251 may individually extend from one of the second non-coating portions 222 of the different second electrodes. Adjacent of the second tab 251 may be disposed to face each other in the third direction. The adjacent of the second tab 251 may be disposed parallel to each other. Accordingly, the second tab member 250 according to the present embodiment may be an assembly of the plurality of the second tab 251 stacked in the third direction. Adjacent of the second tab 251 may be in contact with each other or may be spaced apart from each other by a thickness of the separator 230.

Extension directions of the first tab member 240 and the second tab member 250 may extend from the electrode assembly 200 in a direction opposite to the first direction or extend from the electrode assembly 200 in the second direction or a direction opposite to the second direction, or each of the first tab member 240 and the second tab member 250 may extend from the electrode assembly 200 in one of the second direction and the direction opposite to the second direction.

The cap plate 300 may be coupled to the case 100 and seal the case 100.

The cap plate 300 according to the present embodiment may be formed in a flat plate shape. The cap plate 300 may be disposed on the opening 160 of the case 100. The cap plate 300 may be disposed to face the electrode assembly 200 in the first direction. That is, the cap plate 300 may be disposed at a location spaced a predetermined distance from the electrode assembly 200 in the first direction. The cap plate 300 may be disposed parallel to the bottom portion 110 of the case 100.

The cap plate 300 may be seated on an upper end portion of the case 100, more specifically, on the upper end portions of the front portion 120, the rear portion 130, the first side portion 140, and the second side portion 150. The cap plate 300 may be coupled to the case 100 by any of various coupling methods such as welding, bolting, and fitting.

The cap plate 300 may include an inner cap surface 301 and an outer cap surface 302 which are opposite to each other.

The inner cap surface 301 and the outer cap surface 302 of the cap plate 300 may be disposed to be spaced apart from each other in the first direction. The inner cap surface 301 may be disposed to face the electrode assembly 200, and the outer cap surface 302 may be disposed to face the outer space of the case 100. The inner cap surface 301 and the outer cap surface 302 may be disposed parallel to each other.

The inner cap surface 301 according to the present embodiment may be exemplified as a lower surface of the cap plate 300 disposed to face an upper surface of the electrode assembly 200 from which the first tab member 240 and the second tab member 250 protrude.

The outer cap surface 302 according to the present embodiment may be exemplified as an upper surface of the cap plate 300 disposed opposite to the inner cap surface 301.

The cap plate 300 according to the present embodiment may further include a vent hole 310 and a vent 320.

The vent hole 310 according to the present embodiment may be formed in a hole shape (e.g., in an oval shape) vertically passing through the inner cap surface 301 and the outer cap surface 302 of the cap plate 300 in the first direction. The vent hole 310 may function as a portion which provides a path through which flames, gas, smoke, etc., generated in the case 100 when a thermal runaway of the secondary battery 2 occurs due to an overcurrent, etc., are discharged to the outside of the case 100. A design of the cross-sectional shape of the vent hole 310 may be changed to any of various shapes such as an elliptical shape, a circular shape, and a polygonal shape.

The vent 320 may be installed in the vent hole 310 and opened or closed in conjunction with a change in internal pressure of the case 100. That is, when the secondary battery 2 operates normally, the vent 320 may close the vent hole 310 to block an electrolyte, etc., in the case 100 from leaking to the outside of the case 100 or block moisture, foreign matter, etc., from being introduced into the case 100. The vent 320 may open the vent hole 310 to guide flames, gas, smoke, etc., generated in the case 100 to be discharged to the outside of the case 100 when a thermal runaway of the secondary battery 2 occurs.

The vent 320 according to the present embodiment may be formed in substantially a plate shape. The vent 320 may be fixed to the cap plate 300 by any of various coupling methods such as welding, bolting, and fitting. The vent 320 may be disposed in the vent hole 310 or disposed to face the vent hole 310 in the first direction at an upper side or a lower side of the cap plate 300.

A thickness of the vent 320 parallel to the first direction may be smaller than a thickness of the cap plate 300. Accordingly, the vent 320 may be easily burst or ruptured when an internal pressure of the case 100 increases. The vent 320 may include a notch formed to be concave to the inside of the vent 320 to be ruptured first when the internal pressure of the case 100 increases.

An electrolyte injection hole 330 which may be formed to pass through the cap plate 300 according to the present embodiment and in which a sealing stopper may be installed may be formed in the cap plate 300. The electrolyte injection hole 330 may be disposed to be spaced a predetermined distance from the vent hole 310 in the second direction or the direction opposite to the second direction.

The cap plate 300 according to the present embodiment may include a terminal hole 340.

The terminal hole 340 may be formed in a hole shape (e.g., a square shape) passing through the inner cap surface 301 and the outer cap surface 302 of the cap plate 300 in the first direction. The terminal hole 340 may be provided as a pair of the terminal hole 340. The pair of the terminal hole 340 may be disposed to be spaced a predetermined distance from each other in the second direction. The vent hole 310 and the electrolyte injection hole 330 may be disposed between the pair of the terminal hole 340.

The cap plate 300 according to the present embodiment may further include a side cap surface 303.

The side cap surface 303 may be exemplified as an inner circumferential surface of the cap plate 300 disposed to surround the terminal hole 340 passing through the cap plate 300. The side cap surface 303 may be disposed to intersect the inner cap surface 301 and the outer cap surface 302. As an example, the side cap surface 303 may be disposed perpendicular to the inner cap surface 301 and the outer cap surface 302.

An insulating plate 360 may be disposed between the cap plate 300 and the electrode assembly 200 according to the present embodiment. The insulating plate 360 may prevent the cap plate 300 and the electrode assembly 200 from being in direct contact with each other to insulate the cap plate 300 from the electrode assembly 200. The insulating plate 360 may fix a location of the electrode assembly 200 in the case 100. The insulating plate 360 may prevent the electrode assembly 200 from being damaged when the cap plate 300 is deformed toward the inside of the case 100 due to an external impact, etc.

The insulating plate 360 according to the present embodiment may be disposed to face the electrode assembly 200 in the case 100 in the first direction. That is, the electrode assembly 200, the insulating plate 360, and the cap plate 300 may be sequentially disposed in the first direction. The insulating plate 360 may be fixed to an inner surface of the case 100 by any of various coupling methods such as press fitting, welding, bolting, and bonding. The insulating plate 360 may be in contact with one surface of the electrode assembly 200 from which the first tab member 240 and the second tab member 250 extend. The insulating plate 360 may be formed of an insulating material such as polyethylene (PE), polypropylene (PP), polyethylene terephthalate (PET), or rubber.

The terminal 400 may protrude outward from the cap plate 300. The terminal 400 may be formed of an electrically conductive material such as aluminum, nickel, or copper. The terminal 400 may be electrically connected to the electrode assembly 200. Accordingly, the terminal 400 may function as a part through which the secondary battery 2 is electrically connected to the busbar 3 or external power device.

The terminal 400 may be provided as a pair of the terminal 400. The pair of the terminal 400 may be disposed to be spaced a predetermined distance from each other in the second direction. The pair of the terminal 400 may be disposed to face each other in the second direction with the vent hole 310 interposed therebetween.

Each of the pair of the terminal 400 may be individually connected to one of the first electrode 210 and the second electrode 220 of the electrode assembly 200. As an example, any one terminal of the pair of the terminal 400 may be connected to the first electrode 210 through the first tab member 240, and the other of the pair of the terminal 400 may be connected to the second electrode 220 through the second tab member 250. Accordingly, each of the pair of the terminal 400 may function as one of a positive electrode terminal and a negative electrode terminal of the secondary battery 2.

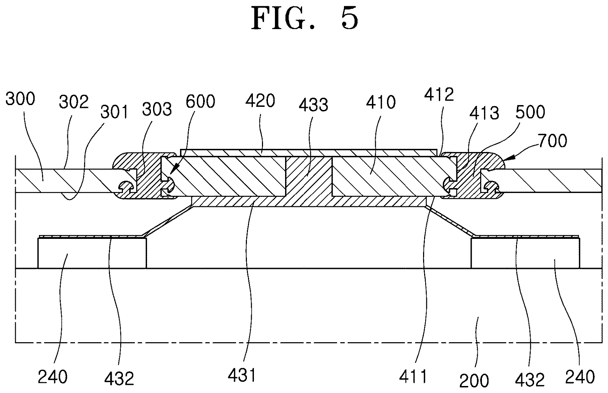

FIG. 5 is a schematic cross-sectional view illustrating a configuration of the terminal according to the first embodiment of the present disclosure. Although an example of the terminal 400 connected to the first tab member 240 among the pair of the terminal 400 is illustrated in FIG. 5, the illustration of FIG. 5 may be equally applied to the terminal 400 connected to the second tab member 250 among the pair of the terminal 400 by replacing the first tab member 240 with the second tab member 250.

Referring to FIGS. 3 and 5, the terminal 400 according to the present embodiment may include a first terminal body 410.

The first terminal body 410 may pass through the cap plate 300 through the terminal hole 340. A lower end portion of the first terminal body 410 may be disposed in the case 100, and an upper end portion of the first terminal body 410 may protrude outward from the cap plate 300.

Each of a pair of the first terminal body 410 may be individually inserted into one of the two of the terminal hole 340.

The first terminal body 410 according to the present embodiment may include an inner surface 411, an outer surface 412, and a side surface 413.

The inner surface 411 and the outer surface 412 of the first terminal body 410 may be disposed to be spaced apart from each other in the first direction. The inner surface 411 may be disposed to face the electrode assembly 200, and the outer surface 412 may be disposed to face the outer space of the case 100. The inner surface 411 and the outer surface 412 may be disposed parallel to each other. The inner surface 411 and the outer surface 412 may be disposed perpendicular to the first direction.

The inner surface 411 according to the present embodiment may be exemplified as a lower surface of the first terminal body 410 disposed to face the upper surface of the electrode assembly 200 from which the first tab member 240 and the second tab member 250 protrude.

The outer surface 412 according to the present embodiment may be exemplified as an upper surface of the first terminal body 410 disposed opposite to the inner surface 411.

Any one of the inner surface 411 of the pair of the first terminal body 410 may be disposed to face a space formed between the pair of the first tab member 240 in the first direction. The other of the inner surface 411 of the pair of the first terminal body 410 may be disposed to face a space formed between the pair of the second tab member 250 in the first direction.

A design of the shape of each of the inner surface 411 and the outer surface 412 may be changed to any of various shapes such as a circular shape, an elliptical shape, and a polygonal shape other than the quadrangular shape illustrated in FIG. 3.

The side surface 413 may be disposed between the inner surface 411 and the outer surface 412. The side surface 413 may be disposed to intersect the inner surface 411 and the outer surface 412.

The side surface 413 according to the present embodiment may be disposed perpendicular to the inner surface 411 and the outer surface 412 and form a circumferential surface of the first terminal body 410. The side surface 413 may be disposed parallel to the side cap surface 303 of the cap plate 300. The side surface 413 may be disposed to be spaced a predetermined distance from the side cap surface 303.

The terminal 400 according to the present embodiment may further include a second terminal body 420.

The second terminal body 420 may be disposed on the outer surface 412 of the first terminal body 410.

The second terminal body 420 according to the present embodiment may have a plate shape perpendicular to the first direction. A lower surface of the second terminal body 420 may be seated on the outer surface 412 of the first terminal body 410. The first terminal body 410 and the second terminal body 420 may be mechanically and electrically connected by welding, bolting, or the like.

A cross-sectional area of the second terminal body 420 perpendicular to the first direction may be smaller than a cross-sectional area of the first terminal body 410 perpendicular to the first direction. In this case, the cross-sectional areas of the second terminal body 420 and the first terminal body 410 perpendicular to the first direction may be cross-sectional areas parallel to an XY plane. Accordingly, the second terminal body 420 may expose a portion of the outer surface 412 of the first terminal body 410.

The first terminal body 410 and the second terminal body 420 may be formed of the same material or different materials. A design of the materials of the first terminal body 410 and the second terminal body 420 may be changed in the range of electrically conductive materials such as copper, nickel, and aluminum.

The first terminal body 410 and the second terminal body 420 may be separately manufactured and coupled to each other or integrally formed with each other.

The busbar 3 may be seated on an upper surface of the second terminal body 420. The busbar 3 and the second terminal body 420 may be bonded by laser welding or the like.

The secondary battery 2 according to the present embodiment may further include a connection member 430 which connects the terminal 400 and the electrode assembly 200.

The connection member 430 may be provided as a pair of the connection member 430 (see FIG. 3).

The pair of the connection member 430 may be disposed between the electrode assembly 200 and the cap plate 300. The pair of the connection member 430 may be disposed to be spaced a predetermined distance from each other in the second direction.

Any one of the pair of the connection member 430 may connect any one of the terminal 400 disposed above the first tab member 240 to the first tab member 240.

The other of the pair of the connection member 430 may connect the other of the terminal 400 disposed above the second tab member 250 to the second tab member 250.

The connection member 430 according to the present embodiment may include a current collecting plate 431, a tab connection portion 432, and a terminal connection portion 433.

The current collecting plate 431 may be disposed between the electrode assembly 200 and the inner surface 411 of the first terminal body 410. The current collecting plate 431 may have a plate shape perpendicular to the first direction. Each of a pair of the current collecting plate 431 provided in the pair of the connection member 430 may be individually disposed to face the inner surface 411 of one of the different of the first terminal bodies 410.

The tab connection portion 432 may extend from the current collecting plate 431 and may be connected to the electrode assembly 200.

The tab connection portion 432 according to the present embodiment may have a plate shape extending from the current collecting plate 431 in a direction intersecting the first direction. As an example, the tab connection portion 432 may be provided as a pair of the tab connection portion 432, and the pair of the tab connection portion 432 may extend from both end portions of the current collecting plate 431 in the second direction and the direction opposite to the second direction.

The pair of the tab connection portion 432 may be individually formed on each of the current collecting plates 431.

The tab connection portion 432 extending from any one of the pair of the current collecting plate 431 may be in contact with the first tab member 240 and bonded to the first tab member 240 by laser welding or the like.

The tab connection portion 432 extending from the other of the pair of the current collecting plate 431 may be in contact with the second tab member 250 and bonded to the second tab member 250 by laser welding or the like.

The terminal connection portion 433 may extend from the current collecting plate 431 and may be connected to the terminal 400.

The terminal connection portion 433 according to the present embodiment may have a column shape extending from an upper surface of the current collecting plate 431 in the first direction. A design of the cross-sectional shape of the terminal connection portion 433 may be changed to any of various shapes such as an elliptical shape and a polygonal shape other than the circular shape illustrated in the drawing.

The terminal connection portion 433 may be inserted into the first terminal body 410 through the inner surface 411. An upper end portion of the terminal connection portion 433 may pass through the outer surface 412 and may be in contact with the lower surface of the second terminal body 420. The upper end portion of the terminal connection portion 433 may be integrally bonded to the second terminal body 420 by laser welding.

Each of the different of the terminal connection portion 433 may be individually formed on one of the pair of the current collecting plate 431. Each of the pair of the terminal connection portion 433 may be individually inserted into one of the different ones of the first terminal body 410 and bonded to one of the different of the second terminal body 420.

Although an example of the terminal 400 connected to the electrode assembly 200 by the connection member 430 has been described above, the terminal 400 may be directly connected to the electrode assembly 200 without the connection member 430. In this case, each of the inner surface 411 of the pair of the terminal 400 may be in direct contact with one of the first tab member 240 and the second tab member 250.

The insulating member 500 may be disposed between the cap plate 300 and the terminal 400. The insulating member 500 may function as a part for insulating the cap plate 300 from the terminal 400. To this end, the insulating member 500 may be formed of an insulating material such as polyphenylene sulfide (PPS), PE, PP, PET, or rubber. The insulating member 500 may be formed by injection molding.

The insulating member 500 according to the present embodiment may be disposed in the terminal hole 340. The insulating member 500 may be formed to surround the side surface 413 of the first terminal body 410. An inner circumferential surface of the insulating member 500 may be disposed to face the side surface 413 of the first terminal body 410 and may be in contact with the side surface 413. An outer circumferential surface of the insulating member 500 may be disposed to face the side cap surface 303 of the cap plate 300 and may be in contact with the side cap surface 303. A lower end portion of the insulating member 500 may protrude toward the inside of the case 100 toward the electrode assembly 200. An upper end portion of the insulating member 500 may protrude toward an outer space of the cap plate 300.

The insulating member 500 may be provided as a pair of the insulating member 500. Each of the pair of the insulating member 500 may be disposed in one of the two of the terminal hole 340. Each of the pair of the insulating member 500 may be formed to surround the side surface 413 of one of the pair of the first terminal body 410.

The first fastening member 600 may extend from the insulating member 500 and may be coupled to the terminal 400. The first fastening member 600 may function as a portion which improves bonding strength between the insulating member 500 and the terminal 400. The first fastening member 600 may be integrally formed with the insulating member 500. The first fastening member 600 may be formed of the same material as the insulating member 500. The first fastening member 600 may be integrally formed with the insulating member 500 by injection molding.

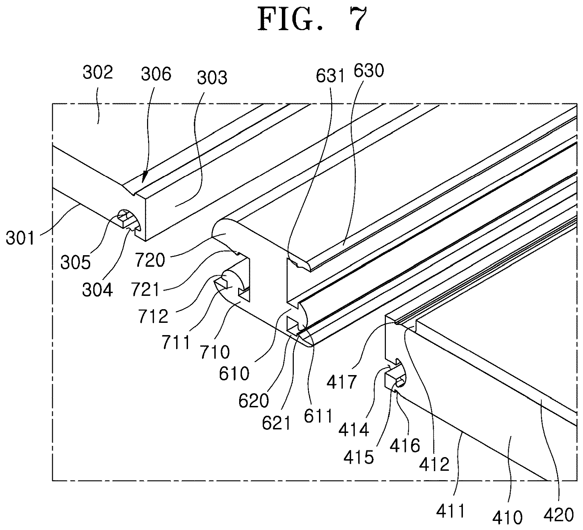

FIG. 6 is a schematic enlarged view illustrating a configuration of the first fastening member according to the first embodiment of the present disclosure and FIG. 7 is an exploded perspective view of FIG. 6.

Referring to FIGS. 6 and 7, the first fastening member 600 according to the present embodiment may include a first side hook 610.

The first side hook 610 may extend from the insulating member 500 and may be coupled to the side surface 413 of the first terminal body 410.

As an example, the first terminal body 410 according to the present embodiment may further include a first side groove 414. The first side groove 414 may have a groove shape formed to be concave in the side surface 413. The first side groove 414 may extend from the side surface 413 toward the inside of the first terminal body 410. An extension direction of the first side groove 414 may be perpendicular to the first direction and the side surface 413. The first side groove 414 may be formed to form a closed loop along the side surface 413.

The first side hook 610 according to the present embodiment may extend from the inner circumferential surface of the insulating member 500 facing the side surface 413 toward the side surface 413. An extension direction of the first side hook 610 may be perpendicular to the side surface 413 and parallel to the extension direction of the first side groove 414. The first side hook 610 may be formed in a closed loop shape entirely surrounding the side surface 413. A cross-sectional shape of the first side hook 610 may be the same as a cross-sectional shape of the first side groove 414. The first side hook 610 may be inserted into the first side groove 414 formed in the side surface 413 of the first terminal body 410. Accordingly, the first side hook 610 may restrict the insulating member 500 from moving relative to the terminal 400 in the first direction or the direction opposite to the first direction.

The first terminal body 410 may further include a first extension groove 415 connected to the first side groove 414. At least a portion of the first extension groove 415 may extend from the first side groove 414 in a direction intersecting the extension direction of the first side groove 414.

The first extension groove 415 according to the present embodiment may be connected to an end portion of the first side groove 414 disposed in the first terminal body 410. Each of opposite sides of the first extension groove 415 may extend toward one of the inner surface 411 and the outer surface 412. The first extension groove 415 may be formed to form a substantially semi-circular cross-section at the end portion of the first side groove 414. However, a shape of the first extension groove 415 may be formed to form a circular, elliptical, or polygonal cross section at the end portion of the first side groove 414.

The first fastening member 600 may further include a first stopper 611 extending from the first side hook 610 and inserted into the first extension groove 415.

At least a portion of the first stopper 611 according to the present embodiment may extend from an end portion of the first side hook 610 in a direction intersecting the extension direction of the first side hook 610. As an example, each of opposite sides of the first stopper 611 may extend from the first side hook 610 inserted into the first side groove 414 toward one of the inner surface 411 and the outer surface 412. A cross-sectional shape of the first stopper 611 may be the same as a cross-sectional shape of the first extension groove 415. The first stopper 611 may be inserted into the first extension groove 415 and hook-coupled to the first terminal body 410. Accordingly, the first stopper 611 may prevent the first side hook 610 from being separated from the first side groove 414 using a hooking force with the first terminal body 410 and restrict the insulating member 500 from moving relative to the terminal 400 in a direction intersecting the first direction.

The first fastening member 600 according to the present embodiment may further include a first inner extension 620.

The first inner extension 620 may extend from the insulating member 500 and may be disposed to face the inner surface 411.

The first inner extension 620 according to the present embodiment may extend from the lower end portion of the insulating member 500 protruding toward the inside of the case 100 in a direction parallel to the inner surface 411. An upper surface of the first inner extension 620 may be in contact with the inner surface 411. Accordingly, the first inner extension 620 may restrict the insulating member 500 from moving relative to the terminal 400 in the first direction or the direction opposite to the first direction.

The first fastening member 600 according to the present embodiment may further include a first inner hook 621 extending from the first inner extension 620 and coupled to the inner surface 411.

As an example, the first terminal body 410 according to the present embodiment may further include a first inner groove 416 formed to be concave from the inner surface 411 toward the outer surface 412. The first inner groove 416 may have a triangular cross section having a short side and a long side. An angle of the short side of the first inner groove 416 with respect to the inner surface 411 may be greater than an angle of the long side of the first inner groove 416 with respect to the inner surface 411. The short side of the first inner groove 416 may be disposed to face the side surface 413.

The first inner hook 621 according to the present embodiment may extend from the upper surface of the first inner extension 620 facing the inner surface 411 toward the inner surface 411. The first inner hook 621 may have a triangular cross section having a short side and a long side. An angle of the short side of the first inner hook 621 with respect to the first inner extension 620 may be greater than an angle of the long side of the first inner hook 621 with respect to the first inner extension 620. The short side of the first inner hook 621 may be disposed to face the insulating member 500. A cross-sectional shape and a cross-sectional area of the first inner hook 621 may be the same as a cross-sectional shape and a cross-sectional area of the first inner groove 416. The first inner hook 621 may be inserted into the first inner groove 416 and hook-coupled to the inner surface 411. Accordingly, the first inner hook 621 may restrict the first inner extension 620 from moving relative to the inner surface 411 in a direction intersecting the first direction.

The first fastening member 600 according to the present embodiment may further include a first outer extension 630.

The first outer extension 630 may extend from the insulating member 500 and may be disposed to face the outer surface 412.

The first outer extension 630 according to the present embodiment may extend from the upper end portion of the insulating member 500 protruding outward from the cap plate 300 in a direction parallel to the outer surface 412. A lower surface of the first outer extension 630 may be in contact with the outer surface 412. Accordingly, the first outer extension 630 may restrict the insulating member 500 from moving relative to the terminal 400 in the first direction or the direction opposite to the first direction.

The first fastening member 600 according to the present embodiment may further include a first outer hook 631 extending from the first outer extension 630 and coupled to the outer surface 412.

As an example, the first terminal body 410 according to the present embodiment may further include a first outer groove 417 formed to be concave from the outer surface 412 toward the inner surface 411. The first outer groove 417 may have a triangular cross section having a short side and a long side. An angle of the short side of the first outer groove 417 with respect to the outer surface 412 may be greater than an angle of the long side of the first outer groove 417 with respect to the outer surface 412. The short side of the first outer groove 417 may be disposed to face the side surface 413.

The first outer hook 631 according to the present embodiment may extend from the lower surface of the first outer extension 630 facing the outer surface 412 toward the outer surface 421. The first outer hook 631 may have a triangular cross section having a short side and a long side. An angle of the short side of the first outer hook 631 with respect to the first outer extension 630 may be greater than an angle of the long side of the first outer hook 631 with respect to the first outer extension 630. The short side of the first outer hook 631 may be disposed to face the insulating member 500. A cross-sectional shape and a cross-sectional area of the first outer hook 631 may be the same as a cross-sectional shape and a cross-sectional area of the first outer groove 417. The first outer hook 631 may be inserted into the first outer groove 417 and hook-coupled to the outer surface 412. Accordingly, the first outer hook 631 may restrict the first outer extension 630 from moving relative to the outer surface 412 in a direction intersecting the first direction.

Although an example of the first fastening member 600 including all of the first side hook 610, the first inner extension 620, and the first outer extension 630 has been described above, the first fastening member 600 may include any one of the first side hook 610, the first inner extension 620, and the first outer extension 630 or any two of the first side hook 610, the first inner extension 620, and the first outer extension 630.

The secondary battery 2 according to the present embodiment may further include a second fastening member 700.

The second fastening member 700 may extend from the insulating member 500 and may be coupled to the cap plate 300. The second fastening member 700 may function as a portion which improves bonding strength between the insulating member 500 and the cap plate 300. The second fastening member 700 may be integrally formed with the insulating member 500. The second fastening member 700 may be formed of the same insulating material as the insulating member 500. The second fastening member 700 may be integrally formed with the insulating member 500 by injection molding.

The second fastening member 700 according to the present embodiment may further include a second inner extension 710.

The second inner extension 710 may extend from the insulating member 500 and may be disposed to face the inner cap surface 301.

The second inner extension 710 according to the present embodiment may extend from the lower end portion of the insulating member 500 protruding toward the inside of the case 100 in a direction parallel to the inner cap surface 301. An upper surface of the second inner extension 710 may be in contact with the inner cap surface 301. Accordingly, the second inner extension 710 may restrict the insulating member 500 from moving relative to the cap plate 300 in the first direction or the direction opposite to the first direction.

The second fastening member 700 according to the present embodiment may further include a second inner hook 711 extending from the second inner extension 710 and coupled to the inner cap surface 301.

As an example, the cap plate 300 according to the present embodiment may further include a second inner groove 304 formed to be concave from the inner cap surface 301 toward the outer cap surface 302.

An extension direction of the second inner groove 304 may be perpendicular to the inner cap surface 301. As an example, the second inner groove 304 may extend from the inner cap surface 301 in the first direction. The second inner groove 304 may be formed to form a closed loop surrounding the side cap surface 303 in the cap plate 300.

The second inner hook 711 according to the present embodiment may extend from the upper surface of the second inner extension 710 facing the inner cap surface 301 toward the inner cap surface 301. An extension direction of the second inner hook 711 may be perpendicular to the inner cap surface 301 and parallel to the extension direction of the second inner groove 304. As an example, the second inner hook 711 may extend from the second inner extension 710 in the first direction. The second inner hook 711 may be formed in a closed loop shape entirely surrounding the outer circumferential surface of the insulating member 500. A cross-sectional shape of the second inner hook 711 may be the same as a cross-sectional shape of the second inner groove 304. The second inner hook 711 may be inserted into the second inner groove 304. Accordingly, the second inner hook 711 may restrict the insulating member 500 from moving relative to the cap plate 300 in a direction intersecting the first direction.

The cap plate 300 may further include a second extension groove 305 connected to the second inner groove 304. At least a portion of the second extension groove 305 may extend from the second inner groove 304 in a direction intersecting the extension direction of the second inner groove 304.

The second extension groove 305 according to the present embodiment may be connected to an end portion of the second inner groove 304 disposed in the cap plate 300. Both sides of the second extension groove 305 may extend from the second inner groove 304 in a direction perpendicular to the side cap surface 303. Each of opposite sides of the second extension groove 305 may extend from the second inner groove 304 in one of opposite directions. The second extension groove 305 may be formed to form a substantially semi-circular cross-section at the end portion of the second inner groove 304. However, a shape of the second extension groove 305 may be formed to form a circular, elliptical, or polygonal cross section at the end portion of the second inner groove 304.

The second fastening member 700 may further include a second stopper 712 extending from the second inner hook 711 and inserted into the second extension groove 305.

At least a portion of the second stopper 712 according to the present embodiment may extend from an end portion of the second inner hook 711 in a direction intersecting the extension direction of the second inner hook 711. As an example, both sides of the second stopper 712 may extend from the second inner hook 711 in a direction perpendicular to the insulating member 500. Each of opposite sides of the second stopper 712 may extend from the second inner hook 711 in one of opposite directions. A cross-sectional shape of the second stopper 712 may be the same as a cross-sectional shape of the second extension groove 305. The second stopper 712 may be inserted into the second extension groove 305 and hook-coupled to the cap plate 300. Accordingly, the second stopper 712 may prevent the second inner hook 711 from being separated from the cap plate 300 using a hooking force with the cap plate 300.

The second fastening member 700 according to the present embodiment may further include a second outer extension 720.

The second outer extension 720 may extend from the insulating member 500 and may be disposed to face the outer cap surface 302.

The second outer extension 720 according to the present embodiment may extend from the upper end portion of the insulating member 500 protruding outward from the cap plate 300 in a direction parallel to the outer cap surface 302. A lower surface of the second outer extension 720 may be in contact with the outer cap surface 302. Accordingly, the second outer extension 720 may restrict the insulating member 500 from moving relative to the cap plate 300 in the first direction or the direction opposite to the first direction.

The second fastening member 700 according to the present embodiment may further include a second outer hook 721 extending from the second outer extension 720 and coupled to the outer cap surface 302.

As an example, the cap plate 300 according to the present embodiment may further include a second outer groove 306 formed to be concave from the outer cap surface 302 toward the inner cap surface 301. The second outer groove 306 may have a triangular cross section having a short side and a long side. An angle of the short side of the second outer groove 306 with respect to the outer cap surface 302 may be greater than an angle of the long side of the second outer groove 306 with respect to the outer cap surface 302. The short side of the second outer groove 306 may be disposed to face the side cap surface 303.

The second outer hook 721 according to the present embodiment may extend from the lower surface of the second outer extension 720 facing the outer cap surface 302 toward the outer cap surface 302. The second outer hook 721 may have a triangular cross section having a short side and a long side. An angle of the short side of the second outer hook 721 with respect to the second outer extension 720 may be greater than an angle of the long side of the second outer hook 721 with respect to the second outer extension 720. The short side of the second outer hook 721 may be disposed to face the insulating member 500. A cross-sectional shape and a cross-sectional area of the second outer hook 721 may be the same as a cross-sectional shape and a cross-sectional area of the second outer groove 306. The second outer hook 721 may be inserted into the second outer groove 306 and hook-coupled to the outer cap surface 302. Accordingly, the second outer hook 721 may restrict the second outer extension 720 from moving relative to the outer cap surface 302 in a direction intersecting the first direction.

Although an example of the second fastening member 700 including both the second inner extension 710 and the second outer extension 720 has been described above, the second fastening member 700 may include only any one of the second inner extension 710 and the second outer extension 720.

Hereinafter, a secondary battery 2 according to a second embodiment of the present disclosure will be described.

The secondary battery 2 according to the present embodiment may be formed such that only a detailed structure of a second fastening member 700 is different from that of the secondary battery 2 according to the first embodiment of the present disclosure.

Accordingly, in description of the secondary battery 2 according to the present embodiment, the detailed structure of the second fastening member 700 which was not described when the secondary battery 2 according to the first embodiment of the present disclosure was described will be described.

The description of the secondary battery 2 according to the first embodiment of the present disclosure may be applied to the other structures of the secondary battery 2 according to the present embodiment without change.

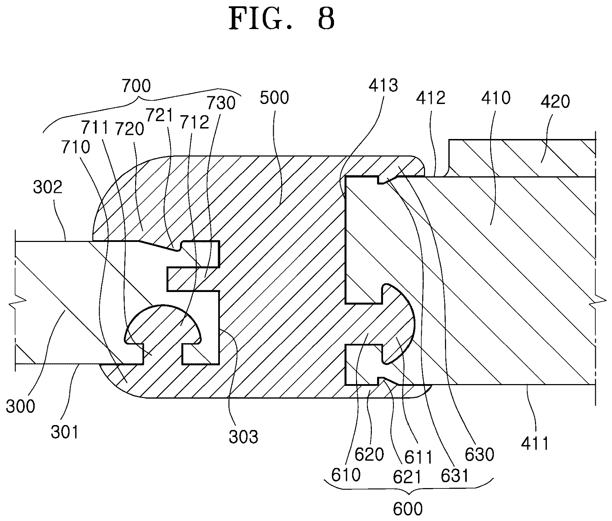

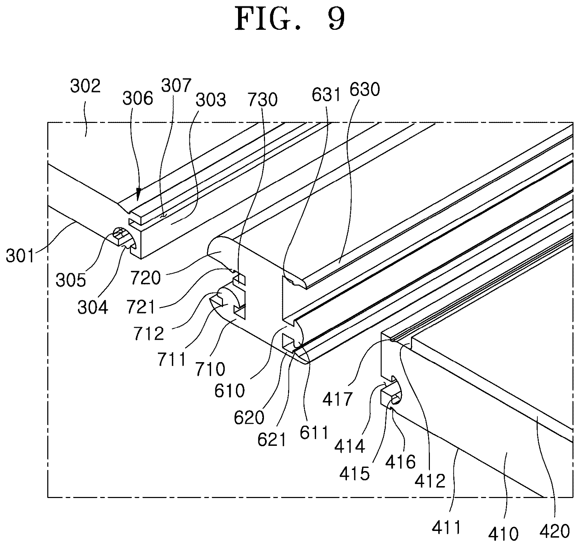

FIG. 8 is a schematic cross-sectional view illustrating a configuration of the secondary battery according to the second embodiment of the present disclosure, and FIG. 9 is an exploded perspective view of FIG. 8.

Referring to FIGS. 8 and 9, the second fastening member 700 according to the present embodiment may further include a second side hook 730.

The second side hook 730 may extend from an insulating member 500 and may be coupled to a side cap surface 303 of a cap plate 300.

As an example, the cap plate 300 according to the present embodiment may further include a second side groove 307. The second side groove 307 may have a groove shape formed to be concave from the side cap surface 303. The second side groove 307 may extend from the side cap surface 303 toward the inside of the cap plate 300. An extension direction of the second side groove 307 may be perpendicular to a first direction and the side cap surface 303. The second side groove 307 may be formed to form a closed loop along the side cap surface 303.

The second side hook 730 according to the present embodiment may extend from an outer circumferential surface of the insulating member 500 facing the side cap surface 303 toward the side cap surface 303. An extension direction of the second side hook 730 may be perpendicular to the side cap surface 303 and parallel to the extension direction of the second side groove 307. The second side hook 730 may be formed in a closed loop shape entirely surrounding the side cap surface 303. A cross-sectional shape of the second side hook 730 may be the same as a cross-sectional shape of the second side groove 307. The second side hook 730 may be inserted into the second side groove 307. Accordingly, the second side hook 730 may restrict the insulating member 500 from moving relative to a terminal 400 in the first direction or a direction opposite to the first direction.

Hereinafter, a secondary battery 2 according to a third embodiment of the present disclosure will be described.

The secondary battery 2 according to the present embodiment may be formed such that only a detailed structure of an insulating member 500 is different from that of the secondary battery 2 according to the first embodiment of the present disclosure and that of the secondary battery 2 according to the second embodiment of the present disclosure.

Accordingly, in description of the secondary battery 2 according to the present embodiment, only the detailed structure of the insulating member 500 which was not described when the secondary battery 2 according to the first embodiment of the present disclosure and the secondary battery 2 according to the second embodiment of the present disclosure were described will be described.

The description of the secondary battery 2 according to the first embodiment of the present disclosure and the description of the secondary battery 2 according to the second embodiment of the present disclosure may be applied to the other structures of the secondary battery 2 according to the present embodiment without change.

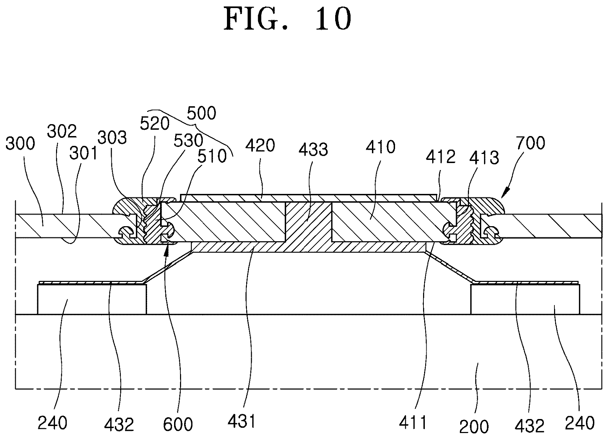

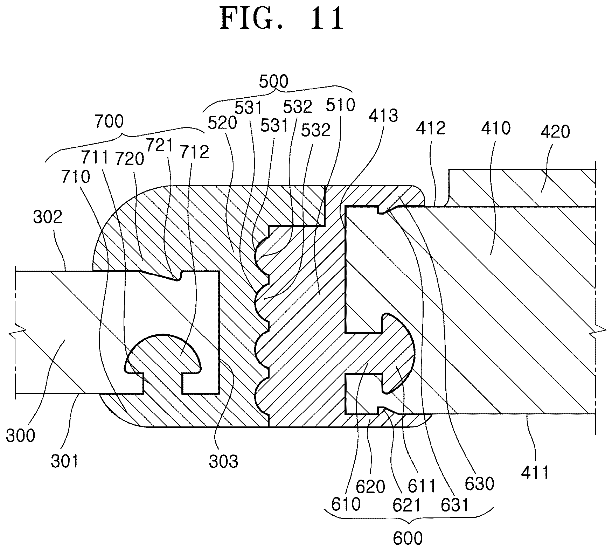

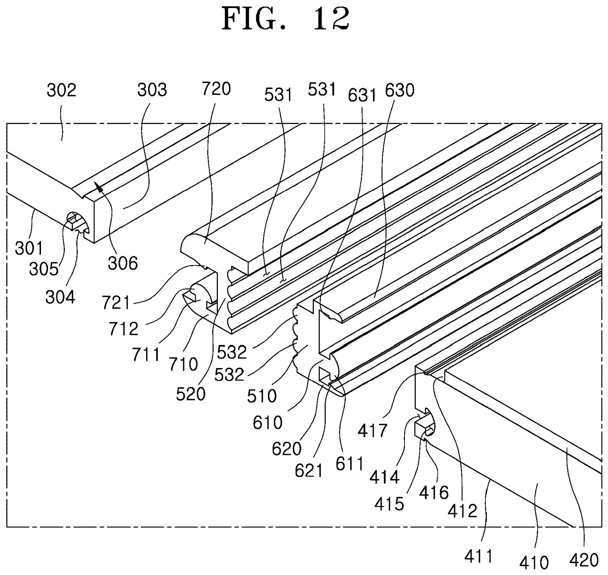

FIG. 10 is a schematic cross-sectional view illustrating a configuration of the secondary battery according to the third embodiment of the present disclosure, FIG. 11 is a schematic enlarged view illustrating a configuration of an insulating member according to the third embodiment of the present disclosure, and FIG. 12 is an exploded perspective view of FIG. 11.

Referring to FIGS. 10 to 12, the insulating member 500 according to the present embodiment may include a first insulating member 510, a second insulating member 520, and an insulating fastening member 530.

In an entire region of the insulating member 500, the first insulating member 510 may form one side exterior of the insulating member 500 disposed to face a terminal 400. An inner circumferential surface of the first insulating member 510 may be in contact with a side surface 413 of a first terminal body 410.

In the entire region of the insulating member 500, the second insulating member 520 may form the other side exterior of the insulating member 500 disposed to face a cap plate 300. The second insulating member 520 may be disposed between the first insulating member 510 and a side cap surface 303 of the cap plate 300. An outer circumferential surface of the second insulating member 520 may be in contact with the side cap surface 303. An inner circumferential surface of the second insulating member 520 may be disposed to face an outer circumferential surface of the first insulating member 510.

In the present embodiment, a first fastening member 600 may be integrally formed with the first insulating member 510, and a second fastening member 700 may be integrally formed with the second insulating member 520.

The first insulating member 510 and the second insulating member 520 may be separately manufactured and then integrally coupled to each other by a bonding process.

As an example, the first insulating member 510 may be injection molded on the terminal 400 along with the first fastening member 600, and the second insulating member 520 may be injection molded on the cap plate 300 along with the second fastening member 700. Next, the inner circumferential surface of the second insulating member 520 may be brought into contact with the outer circumferential surface of the first insulating member 510, and the inner circumferential surface of the second insulating member 520 and the outer circumferential surface of the first insulating member 510 may be integrally coupled to each other by laser welding, ultrasonic welding, bonding, or thermo compression bonding.

Materials of the first insulating member 510 and the second insulating member 520 may be the same or different. As an example, the first insulating member 510 and the second insulating member 520 may be formed of PPS (polyphenylene sulfide) materials with different filler contents.

The insulating fastening member 530 may be disposed between the first insulating member 510 and the second insulating member 520. The insulating fastening member 530 may function as a portion forming a bonding surface between the first insulating member 510 and the second insulating member 520 to improve a coupling force between the first insulating member 510 and the second insulating member 520.

The insulating fastening member 530 according to the present embodiment may include an insulating groove 531 and an insulating hook 532.

The insulating groove 531 may be formed to be concave toward the inside of any one of the first insulating member 510 and the second insulating member 520. Hereinafter, an example of the insulating groove 531 formed in the second insulating member 520 will be described. However, the insulating groove 531 may be formed in the first insulating member 510.

The insulating groove 531 according to the present embodiment may have a groove shape formed to be concave from the inner circumferential surface of the second insulating member 520 facing the first insulating member 510 toward the cap plate 300. The insulating groove 531 may be formed to form a closed curve disposed to surround the first insulating member 510. The insulating groove 531 may have a substantially semi-circular cross-section.

The insulating groove 531 may be provided as a plurality of the insulating groove 531. The plurality of the insulating groove 531 may be disposed at a predetermined distance from each other in a first direction.

The insulating hook 532 may protrude from the other of the first insulating member 510 and the second insulating member 520. Hereinafter, an example in which the insulating groove 531 is formed in the second insulating member 520 and therefore the insulating hook 532 is formed on the first insulating member 510 will be described. However, the insulating hook 532 when the insulating groove 531 is formed in the first insulating member 510, the insulating hook 532 may be formed on the second insulating member 520.

The insulating hook 532 according to the present embodiment may protrude from the outer circumferential surface of the first insulating member 510 facing the second insulating member 520 toward the second insulating member 520. The insulating hook 532 may be formed to form a closed curve disposed to surround the first insulating member 510. The insulating hook 532 may have a substantially semi-circular cross-section. The insulating hook 532 may be inserted into the insulating groove 531 and hook-coupled to the second insulating member 520. Accordingly, the insulating hook 532 may restrict the first insulating member 510 and the second insulating member 520 from moving relative to each other in the first direction or a direction opposite to the first direction.

The insulating hook 532 may be provided as a plurality of the insulating hook 532. The plurality of the insulating hook 532 may be disposed at a predetermined distance from each other in the first direction. Each of the plurality of the insulating hook 532 may be individually inserted into one of the different of the insulating groove 531.

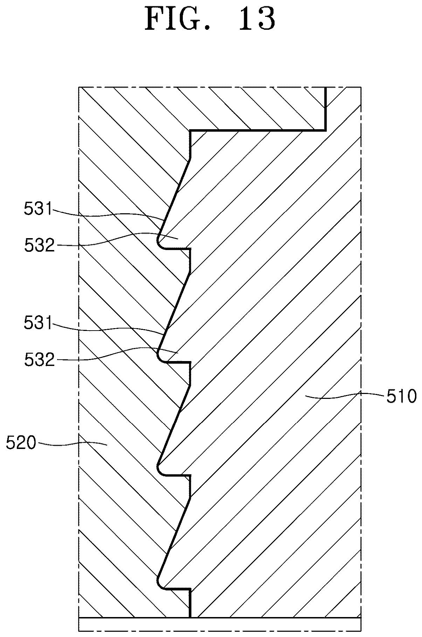

FIG. 13 is a view illustrating a modified example of the insulating groove and the insulating hook illustrated in FIG. 11.

Referring to FIG. 13, each of an insulating groove 531 and an insulating hook 532 may be formed to have a triangular cross section. A design of the cross-sectional shape of each of the insulating groove 531 and the insulating hook 532 may be changed to any of various shapes such as a quadrangular shape and a pentagonal shape other than the shapes illustrated in FIGS. 11 and 13.

Hereinafter, a secondary battery 2 according to a fourth embodiment of the present disclosure will be described.

The secondary battery 2 according to the present embodiment may be formed such that only detailed structures of a terminal 400 and a connection member 430 are different from those of the secondary battery 2 according to each of the first to third embodiments of the present disclosure.

Accordingly, in description of the secondary battery 2 according to the present embodiment, the detailed structures of the terminal 400 and the connection member 430 which were not described when the secondary battery 2 according to each of the first to third embodiments of the present disclosure was described will be described.

The description of the secondary battery 2 according to each of the first to third embodiments of the present disclosure may be applied to the other structures of the secondary battery 2 according to the present embodiment without change.

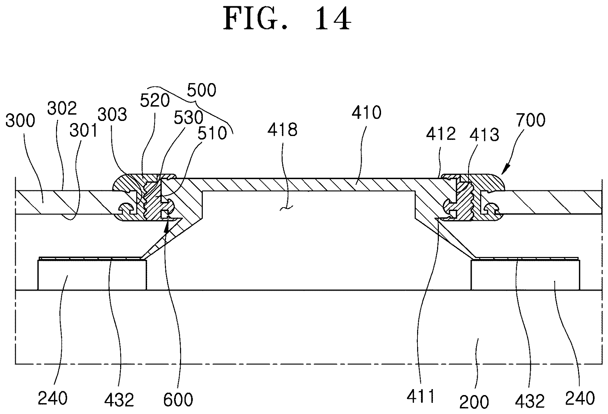

FIG. 14 is a schematic cross-sectional view illustrating a configuration of the secondary battery according to the fourth embodiment of the present disclosure.

Referring to FIG. 14, a terminal 400 according to the present embodiment may be formed to include only a first terminal body 410.

The terminal 400 including only the first terminal body 410 may mean both that the second terminal body 420 is omitted and that the second terminal body 420 is also integrally formed with the first terminal body 410 so that a single of the first terminal body 410 is formed in FIGS. 5 and 10.

The terminal 400 according to the present embodiment may further include a terminal groove 418 formed to be concave from an inner surface 411 of the first terminal body 410 toward an outer surface 412. A design of an area, a depth, and the like of the terminal groove 418 may be variously changed according to a shape, a size, and the like of the first terminal body 410.

The connection member 430 according to the present embodiment may be formed to include only a tab connection portion 432 without a current collecting plate 431 or a terminal connection portion 433.

The tab connection portion 432 according to the present embodiment may directly extend from the inner surface 411 of the first terminal body 410. The tab connection portion 432 may be integrally formed with the first terminal body 410. However, the tab connection portion 432 may be manufactured separately from the first terminal body 410 and then connected to the inner surface 411.

According to the present disclosure, when an internal pressure of a secondary battery increases, an insulating member and a terminal can be prevented from being moved relative to a cap plate or from being separated from the cap plate.

However, the effects obtainable through the present disclosure are not limited to the above effects, and other technical effects that are not mentioned will be clearly understood by those skilled in the art from the following description of the present disclosure.

While the present disclosure has been described with reference to embodiments shown in the drawings, these embodiments are merely illustrative and it should be understood that various modifications and equivalent other embodiments can be derived by those skilled in the art on the basis of the embodiments.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery, comprising:
a case;
an electrode assembly in the case;
a cap plate coupled to the case, the cap plate facing the electrode assembly;
a terminal protruding outward from the cap plate, the terminal being connected to the electrode assembly;
an insulating member between the cap plate and the terminal; and
a first fastening member extending from the insulating member, the first fastening member being coupled to the terminal.

2. The secondary battery as claimed in claim 1, wherein:
the terminal comprises a first terminal body passing through the cap plate; and
the first terminal body comprises an inner surface facing the electrode assembly, an outer surface opposite to the inner surface, and a side surface between the inner surface and the outer surface, the side surface intersecting the inner surface and the outer surface.

3. The secondary battery as claimed in claim 2, wherein:
the first terminal body further comprises a first side groove that is concave from the side surface; and
the first fastening member comprises a first side hook extending from the insulating member, the first side hook being in the first side groove.

4. The secondary battery as claimed in claim 3, wherein:
the first terminal body further comprises a first extension groove connected to the first side groove and extending in a direction intersecting an extension direction of the first side groove; and
the first fastening member comprises a first stopper extending from the first side hook, the first stopper being in the first extension groove.

5. The secondary battery as claimed in claim 2, 3 or 4, wherein the first fastening member comprises a first inner extension extending from the insulating member, the first inner extension facing the inner surface.

6. The secondary battery as claimed in claim 5, wherein:
the first terminal body further comprises a first inner groove that is concave from the inner surface toward the outer surface; and
the first fastening member further comprises a first inner hook extending from the first inner extension, the first inner hook being in the first inner groove.

7. The secondary battery as claimed in any one of claims 2 to 6, wherein the first fastening member comprises a first outer extension extending from the insulating member, the first outer extension facing the outer surface.

8. The secondary battery as claimed in claim 7, wherein:
the first terminal body further comprises a first outer groove that is concave from the outer surface toward the inner surface; and
the first fastening member further comprises a first outer hook extending from the first outer extension, the first outer hook being in the first outer groove.

9. The secondary battery as claimed in any one of claims 2 to 8, wherein the terminal further comprises a second terminal body on the outer surface, the second terminal body being connected to the first terminal body.

10. The secondary battery as claimed in any preceding claim, further comprising a second fastening member extending from the insulating member, the second fastening member being coupled to the cap plate.

11. The secondary battery as claimed in claim 10, wherein the cap plate comprises:
an inner cap surface facing the electrode assembly; and
an outer cap surface opposite to the inner cap surface,
wherein the second fastening member comprises a second inner extension extending from the insulating member, the second inner extension facing the inner cap surface.

12. The secondary battery as claimed in claim 10 or 11, wherein the cap plate comprises:
an inner cap surface facing the electrode assembly; and
an outer cap surface opposite to the inner cap surface,
wherein the second fastening member comprises a second outer extension extending from the insulating member, the second outer extension facing the outer cap surface.

13. The secondary battery as claimed in claim 12, wherein:
the cap plate further comprises a second outer groove that is concave from the outer cap surface toward the inner cap surface; and
the second fastening member further comprises a second outer hook extending from the second outer extension, the second outer hook being in the second outer groove.

14. The secondary battery as claimed in any preceding claim, wherein the insulating member comprises:
a first insulating member facing the terminal;
a second insulating member facing the cap plate; and
an insulating fastening member between the first insulating member and the second insulating member.

15. A battery module, comprising:
a housing; and
a plurality of secondary batteries in the housing,
wherein each of the plurality of secondary batteries is a secondary battery according to any preceding claim.
